# EUROPÄISCHE PATENTSCHRIFT

(11) **EP 2 452 419 B1**
(45) Veröffentlichungstag und Bekanntmachung des Hinweises auf die Patenterteilung: **05.03.2014**
(21) Anmeldenummer: 10730091.5
(22) Anmeldetag: 25.06.2010
(51) Int. Cl.: H02K 5/04, H02K 7/116, F16B 21/18

(54) **ELEKTROMOTOR MIT ANBAUGEHÄUSE**
ELECTRIC MOTOR HAVING AN ATTACHMENT HOUSING
MOTEUR ÉLECTRIQUE COMPORTANT UN CARTER AJOUTÉ

(30) Priorität: 07.07.2009 DE 102009032088
(43) Veröffentlichungstag der Anmeldung: 16.05.2012
(73) Patentinhaber: Maxon Motor AG, 6072 Sachseln (CH)
(72) Erfinder: SCHÄFER, Rolf, 79356 Eichstetten am Kaiserstuhl (DE)
(74) Vertreter: Grünecker, Kinkeldey, Stockmair & Schwanhäusser
(86) Internationale Anmeldenummer: PCT/EP2010/003906
(87) Internationale Veröffentlichungsnummer: WO 2011/003526

(56) Entgegenhaltungen:
- EP-A1- 2 458 231
- WO-A2-2009/012767
- DE-A1- 3 421 188
- DE-A1- 10 015 911
- DE-C- 767 134
- DE-C1- 19 729 988
- FR-A1- 2 584 788
- FR-A1- 2 613 193
- US-A1- 2007 256 412
- BLACK T: "QUICK GUIDE TO RETAINING RINGS", DESIGN ENGINEERING, MORGAN-GRAMPIAN LTD. LONDON, GB, Bd. 51, Nr. 2, 1. Februar 1980 (1980-02-01), Seiten 60-62, XP001600323, ISSN: 0308-8448

## Beschreibung

Die Erfindung betrifft einen Elektromotor mit Anbaugehäuse nach dem Oberbegriff des unabhängigen Anspruchs 1.

Aus dem Stand der Technik ist es bekannt, das Gehäuse eines Getriebes mit einem Elektromotor zu verschrauben, zu verstemmen oder zu verschweißen. Diese vorgenannten Verbindungsarten sind entweder teuer oder führen zu radialen Verformungen der verbundenen Bauteile. Letzteres ist in jedem Fall unerwünscht und insbesondere dann problematisch, wenn durch die radialen Verformungen Unwuchten erzeugt werden, die ihrerseits wiederum zu einer erhöhten Betriebsgeräuschentwicklung bis hin zu Funktionsstörungen führen können.

Es wurde deshalb bereits vorgeschlagen, die Verbindung zwischen Elektromotor und Getriebe formschlüssig über Schnappverbindungen herbeizuführen. Aus DE 197 29 988 C1 ist eine formschlüssige Verbindung zwischen einem aus Kunststoff bestehenden Getriebegehäuseteil und einer Adapterplatte eines Elektromotors bekannt. Das Getriebegehäuseteil ist dabei das Hohlrad eines Planetengetriebes. Die mit dem Elektromotor verbundene Adapterplatte ist zylindrisch ausgebildet und kann derart in das Hohlrad eingeschoben werden, dass der zylindrische Außenumfang der Adapterplatte flächig an dem Innenumfang des Innenhohlrades anliegt. Die Adapterplatte enthält ferner mehrere über den Umfang verteilte Rasinasen, die in entsprechende Rastöffnungen des Hohlrades eingreifen. Adapterplatte und Rastnasen sind unnachgiebig ausgeführt, so dass sich das Hohlrad beim Ineinanderstecken der beiden zu verbindenden Bauteile elastisch in radialer Richtung aufweiten können lassen muss. Nach dem Einschnappen der Rastnasen in die Rastöffnungen kehrt das Hohlrad in seinen unverformten Zustand zurück.

Bei den aus dem Stand der Technik bekannten formschlüssigen Verbindungen zwischen einem Elektromotor und einem Getriebe mittels ineinander eingreifender Rastnasen und Rastöffnungen ergibt sich das Problem, dass die Sicherheit und Festigkeit der Verbindung nicht für alle erdenklichen Belastungsfälle zuverlässig gewährleistet werden kann. Durch die über den Umfang verteilten Schnappelemente ist keine gleichmäßige, sondern lediglich eine punktuelle Verbindung zwischen Elektromotor und Getriebe gegeben. Insbesondere in Verbindung mit der geforderten elastischen Ausführung des Hohlrads der in DE 197 29 988 C1 beschriebenen Verbindung kann dies je nach Belastungsfall zu einer welligen Verformung des Hohlrads bis hin zum Ausreißen der Schnappverbindung führen. Als nachteilig hat sich zudem herausgestellt, dass eine Verschmutzung des Getriebes durch die Rastöffnungen in der Außenwand des Getriebegehäuses begünstigt wird. Bei sichtbareren Elektromotoren mit Anbaugehäuse können die nach außen hin erkennbaren Rastöffnungen und Rastnasen zudem das ästhetische Gesamtbild trüben. Weiterhin als nachteilig hat sich auch herausgestellt, dass die Materialwahl für das Getriebegehäuse bei der aus DE 197 29 988 C1 bekannten Verbindung durch die geforderte Elastizität des Getriebegehäuses stark limitiert, und eine äußerst stabile Ausführung des Getriebegehäuses dadurch nicht möglich ist. Ein weiterer Nachteil der aus dem Stand der Technik bekannten Schnappverbindungen zwischen Elektromotor und Getriebe ist, dass eine zerstörungsfreie Demontage von Elektromotor und Getriebe nicht möglich ist.

Die US 2007/256412 A1 beschäftigt sich mit der Montage des Gehäuses eines mehrstufigen Turboverdichters. Es wird vorgeschlagen, die Gehäuseteile mittels einer Schnappringverbindung miteinander zu verbinden. Die DE 10015911 A1 beschäftigt sich mit einer Verbindung zwischen einer Ventilaufnahme und einem Ventilsitz. Um die beiden Bauteile gegeneinander zu sichern, kommt ein Sicherungsring zum Einsatz, der unter Spiel in entsprechende Nuten der beiden Bauteile eingreift.

Aufgabe der vorliegenden Erfindung ist es, für einen Elektromotor mit Anbaugehäuse eine verbesserte, kostengünstige, formschlüssige Verbindung zwischen Elektromotorgehäuse und Anbaugehäuse anzugeben, die eine verbesserte Krafteinleitung in axialer Richtung aufweist und eine kompakte Bauweise ermöglicht. Zudem sollen die weiteren aus dem Stand der Technik bekannten Nachteile umgangen werden. Es ist demnach auch Aufgabe der vorliegenden Erfindung, die Verbindungselemente nicht nach außen hin in Erscheinung treten zu lassen und das Verschmutzungsrisiko der in dem Anbaugehäuse untergebrachten Bautgruppe, beispielsweise des Getriebes, zu senken. Ferner soll der Formschluss zerstörungsfrei gelöst werden können, wobei die Materialwahl für Anbaugehäuse und Elektromotorgehäuse keinen besonderen Beschränkungen unterliegen soll.

Die Aufgabe wird gelöst durch die Merkmale des Anspruchs 1 der vorliegenden Erfindung. Durch den Federring wird eine gleichmäßige Krafteinleitung in axialer Richtung über den gesamten Umfang von Anbaugehäuse und Elektromotorgehäuse erreicht. Gegenüber Lösungen mit einzelnen, über den Umfang verteilten Rastnasen und Rastöffnungen bedeutet die erfindungsgemäße Lösung eine weitaus stabilere Verbindung zwischen den beiden Bauteilen. Federring und Nuten sind von außen nicht sichtbar, wodurch zum einen das ästhetische Erscheinungsbild bei sichtbaren Elektromotoren mit Anbaugehäuse verbessert wird und zum anderen ein wirksamer Schutz gegenüber Verschmutzungen der in dem Anbaugehäuse untergebrachten Baugruppe, beispielsweise des Getriebes, gewährleistet ist. Der Schutz kann beispielsweise durch das Einsetzen eines Dichtungsrings zwischen Elektromotorgehäuse und Anbaugehäuse weiter erhöht werden. Die Verbindung kann derart ausgeführt werden, dass die Außenwand entweder durch das Anbaugehäuse oder durch das Elektromotorgehäuse gebildet wird. Der erfindungsgemäße Formschluss ist einfach und kostengünstig in Herstellung und Montage. Die Erfindung bietet sich vor allem für die Verbindung zwischen dem Elektromotorgehäuse und einem Getriebegehäuse an. Dabei können alle gängigen Getriebe, wie zum Beispiel Planetengetriebe oder Stirnradgetriebe, zum Einsatz kommen. Die Erfindung eignet sich auch für die Verbindung weiterer Anbaugehäuse, wie beispielsweise Encodergehäuse. Die Verbindung kann generell direkt zwischen Elektromotorgehäuse und Anbaugehäuse oder über jeweils angeflanschte Adapterbauteile erfolgen.

Elektromotorgehäuse und Anbaugehäuse sind zumindest im Verbindungsbereich zylindrisch und zueinander konzentrisch ausgeführt. Dies vereinfacht die Montage und gewährleistet für den Fall einer Verbindung zwischen Elektromotorgehäuse und Getriebegehäuse die exakte Ausrichtung von Elektromotor und Getriebe.

Der Federring ist vor dem Herstellen der Verbindung an einem ersten zu verbindenden Bauteil in der Nut dieses Bauteils vormontiert, wobei zwischen dem Innendurchmesser des Federrings und dem Innendurchmesser der Nut, bzw. zwischen dem Außendurchmesser des Federrings und dem Außendurchmesser der Nut radiales Spiel besteht. Eine dem zweiten zu verbindenden Bauteil zugewandte erste Kante des Außenumfangs bzw. Innenumfangs des radial aus der Nut ragenden Bereichs des Federrings weist eine erste Fase auf, und eine äußere zweite Kante der Innenwandung bzw. Außenwandung des zweiten zu verbindenden Bauteils weist eine zweite Fase auf. Die elastische Verjüngung oder Aufweitung des Federrings zur Montage der beiden zu verbindenden Bauteile ist dabei durch ein Zusammenwirken von erster Fase und zweiter Fase beim Zusammenstecken der beiden Bauteile bedingt. Dies ermöglicht eine einfache Montage ohne die Verwendung spezieller Werkzeuge zur Aufweitung bzw. Verjüngung des Federrings.

Erfindungsgemäß weisen eine der ersten Kante gegenüberliegende dritte Kante auf dem selben Umfang des Federrings, auf dem sich die erste Kante befindet, eine dritte Fase, und eine vierte Kante, die von einer auf der Innenwandung bzw. Außenwandung des zweiten zu verbindenden Bauteils liegenden und dem ersten Bauteil zugewandten Kante der Nut des zweiten zu verbindenden Bauteils gebildet wird, eine vierte Fase auf, wobei die elastische Aufweitung oder Verjüngung des Federrings zur Demontage der beiden Bauteile durch ein Zusammenwirken von dritter Fase und vierter Fase beim Auseinanderziehen der beiden Bauteile bedingt ist. Hierdurch wird auch die zerstörungsfreie Demontage von Elektromotor und Anbaugehäuse ohne die Verwendung spezieller Werkzeuge zur Verjüngung bzw. Aufweitung des Federrings ermöglicht.

Weitere Ausgestaltungen der vorliegenden Erfindung sind Gegenstand der Unteransprüche.

Vorzugsweise liegt die zylindrische Außenwandung zur Zentrierung flächig an der zylindrischen Innenwandung an. Dies erlaubt eine einfache konzentrische Montage von Getriebe und Elektromotor.

In einer bevorzugten Ausführungsform weisen Außenwandung und Innenwandung zur Drehmomentableitung axial zusammensteckbare, ineinander eingreifende Formschlusselemente auf. Vorzugsweise sind die Formschlusselemente der Innenwandung durch eine Innenverzahnung, und die Formschlusselemente der Außenwandung durch mindestens zwei in die Innenverzahnung eingreifende Zähne gebildet.

In einer besonders bevorzugten Ausführungsform der vorliegenden Erfindung ist das Anbaugehäuse ein Hohlrad eines Planetengetriebes, wobei die Innenverzahnung durch die Verzahnung des Hohlrades gebildet wird. Die für die Drehmomentableitung notwendigen Formschlusselemente der Innenwandung erfordern dadurch keinen separaten Herstellungsschritt.

Vorzugsweise entspricht der Winkel der ersten Fase gemessen zur Achse des Federrings dabei dem Winkel der zweiten Fase gemessen zur Achse der zylindrischen Innenwandung oder Außenwandung des zweiten zu verbindenden Bauteils. So können die beiden Fasen beim Zusammenstecken der beiden zu verbindenden Bauteile optimal aufeinander gleiten. Vorzugsweise liegt dabei der Winkel der ersten Fase und der zweiten Fase im Bereich zwischen 5° und 30°. Durch diesen relativ flachen Winkel wird die Kraft, die zur Montage und dadurch zur Aufweitung oder Verjüngung des Federrings notwendig ist, gering gehalten. Da die notwendige axiale Ausdehnung der ersten Fase und der zweiten Fase umso größer wird, je kleiner dieser Winkel gewählt wird, stellt es einen guten Kompromiss zwischen leichter Montage und notwendigem axialen Bauraum dar, wenn der Winkel der ersten Fase und der zweiten Fase 20° beträgt.

Vorzugsweise entspricht der Winkel der dritten Fase gemessen zur Achse des Federrings dem Winkel der vierten Fase gemessen zur Achse der zylindrischen Innenwandung oder Außenwandung des zweiten zu verbindenden Bauteils. Vorzugsweise ist dabei der Winkel der dritten Fase und der vierten Fase größer als der Winkel der ersten Fase und der zweiten Fase. Dadurch ist die Kraft, die zur Demontage der aus Elektromotor und Anbaugehäuse bestehenden Einheit durch Auseinanderziehen von Elektromotor und Anbaugehäuse erforderlich ist, größer als die Kraft, die zur Montage der beiden Bauteile erforderlich ist. Vorzugsweise liegt der Winkel der dritten Fase und der vierten Fase zwischen 60° und 80°. Dabei hat sich ein Winkel von 70° als besonders vorteilig erwiesen.

In einer bevorzugten Ausführungsform ist die axiale Erstreckung der ersten Nut und der zweiten Nut begrenzt und entspricht jeweils der axialen Erstreckung des Federrings. Hierdurch wird Spiel in axialer Richtung vermieden. Die Verbindung lässt somit keine Relativbewegung von Elektromotor und beispielsweise Getriebe in axialer Richtung zu.

In einer weiteren bevorzugten Ausführungsform der vorliegenden Erfindung ist der Federring aus Metall, vorzugsweise Stahl, hergestellt. Der Federring kann jedoch auch aus Kunststoff oder einem Verbundwerkstoff hergestellt sein. Zu den möglichen Verbundwerkstoffen zählen u. a. Kunststoff mit Füllstofferf, Carbon sowie Kombinationen der vorgenannten Werkstoffe, insbesondere Stahl. Die Materialwahl hat dabei durch die verschiedenen Elastizitätsmodule der Materialien entscheidende Auswirkungen auf die Federkraft des Federrings und somit auf die Kraft, die zur Montage bzw. Demontage erforderlich ist.

Im Folgenden wird ein Ausführungsbeispiel der vorliegenden Erfindung anhand von Zeichnungen näher erläutert. Es zeigen:
- Figur 1: eine teilweise geschnittene Seitenansicht eines erfindungsgemäßen Elektromotors mit Anbaugehäuse in Form einer Elektromotor-Getriebe-Einheit,
- Figur 2: einen Schnitt durch die erfindungsgemäße Elektromotor-Getriebe-Einheit aus Figur 1,
- Figur 3: einen weiteren Schnitt durch die erfindungsgemäße Elektromotor-Getriebe-Einheit aus Figur 1,
- Figur 4: eine Draufsicht auf den Federring der erfindungsgemäßen Elektromotor-Getriebe-Einheit aus den Figuren 1 bis 3,
- Figur 5: einen Schnitt durch die Draufsicht des Federrings gemäß Figur 4,
- Figur 6: eine geschnittene Draufsicht auf das Getriebegehäuse der Elektromotor-Getriebe-Einheit aus den Figuren 1 bis 3, und
- Figur 7: eine Explosionsdarstellung der erfindungsgemäßen Elektromotor-Getriebe-Einheit aus den Figuren 1 bis 3.

Für die weiteren Ausführungen gilt: Durch gleiche Bezugszeichen werden gleiche Bauteile bezeichnet. Sind in einer Figur zum besseren Verständnis Bezugszeichen enthalten, jedoch im zugehörigen Beschreibungstext nicht näher erläutert, so wird auf deren Erwähnung in vorangegangenen Figurenbeschreibungen Bezug genommen. Die Figuren zeigen lediglich die für die Verbindung zwischen Elektromotorgehäuse und Getriebegehäuse relevanten Bauteile eines Elektromotors und des mit ihm verbundenen Getriebes.

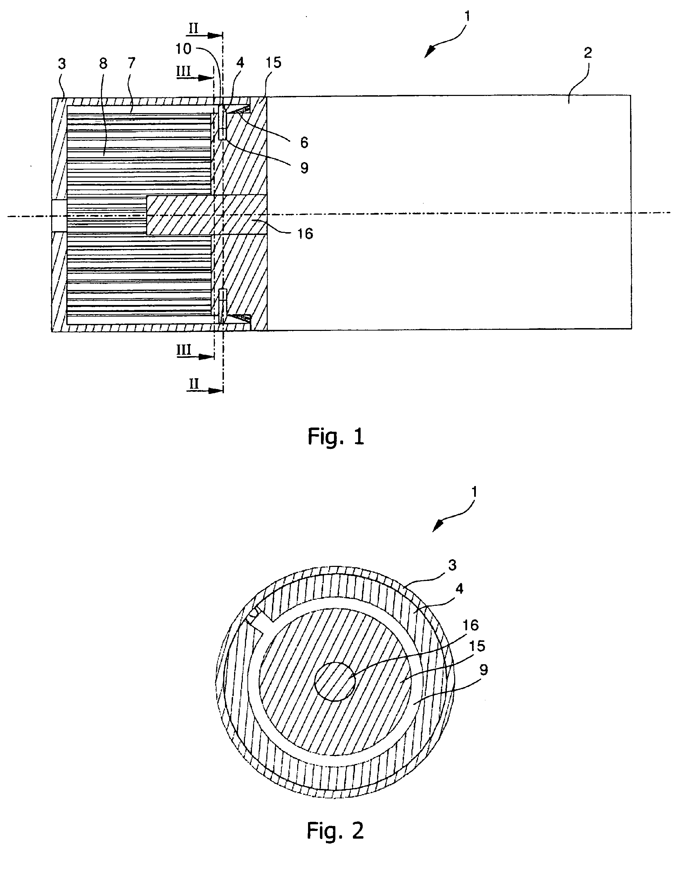

Figur 1 zeigt eine teilweise geschnittene Seitenansicht eines erfindungsgemäßen Elektromotors mit Anbaugehäuse in Form einer Elektromotor-Getriebe-Einheit 1. Bis auf das Elektromotorgehäuse 2 sind alle Bauteile geschnitten dargestellt. Das Elektromotorgehäuse 2 ist über eine Adapterplatte 15 mit dem Getriebegehäuse 3 verbunden, welches ein Hohlrad eines Planetengetriebes bildet. Der innere zylindrische Durchmesser der Innenverzahnung 8 des Hohlrads 3 ist als Innenwandung 7 bezeichnet und liegt im Bereich der Verbindung flächig an der zylindrischen Außenwandung 6 der Adapterplatte 15 an. Für den axialen Formschluss zwischen Hohlrad 3 und Adapterplatte 15 ist der Federring 4 vorgesehen, der mit seinem radial inneren Bereich in einer ersten umlaufenden Nut 9 der Außenwandung 6 der Adapterplatte 15, und mit seinem radial äußeren Bereich in einer zweiten umlaufenden Nut 10 der Innenwandung 7 des Hohlrads 3 ruht. Die konzentrisch zu Hohlrad 3, Adapterplatte 15 und Elektromotorgehäuse 2 angeordnete Welle des Elektromotors ist mit den Bezugszeichen 16 bezeichnet. Über die ins innere des Hohlrades 3 hineinragende Welle 16 wird ein nicht dargestelltes Sonnenrad des Planetengetriebes angetrieben. Auch die weiteren Bauteile des Planetengetriebes sind nicht dargestellt. Die Adapterplatte 15 ist mit dem Elektromotorgehäuse 2 vorzugsweise verschraubt. So ist es möglich, bestehende Elektromotoren ohne größeren Entwicklungs- und Fertigungsaufwand für die erfindungsgemäße Verbindung nachzurüsten. Die Adapterplatte 15 kann jedoch auch einstückig mit dem Elektromotorgehäuse 2 ausgeführt oder durch den Magnetträger des Elektromotors gebildet sein. Die Außendurchmesser von Elektromotorgehäuse und Getriebegehäuse sind gleich, wodurch sich eine ansprechende Gesamterscheinung ergibt, und wobei die Stoßfuge zwischen den beiden verbundenen Bauteilen kaum in Erscheinung tritt.

Figur 2 zeigt einen axial an der Position des Federrings 4 angesetzten Schnitt der erfindungsgemäßen Elektromotor-Getriebe-Einheit aus der Figur 1. Der Federring 4 ist an einer Stelle in Umfangsrichtung radial geschlitzt und über seinen gesamten Umfang radial elastisch. Hierdurch wird in Kombination mit dem radialen Spiel in der ersten umlaufenden Nut 9 eine elastische Verjüngung des Federringdurchmessers ermöglicht, die zur Montage bzw. Demontage der Elektromotor-Getriebe-Einheit erforderlich ist.

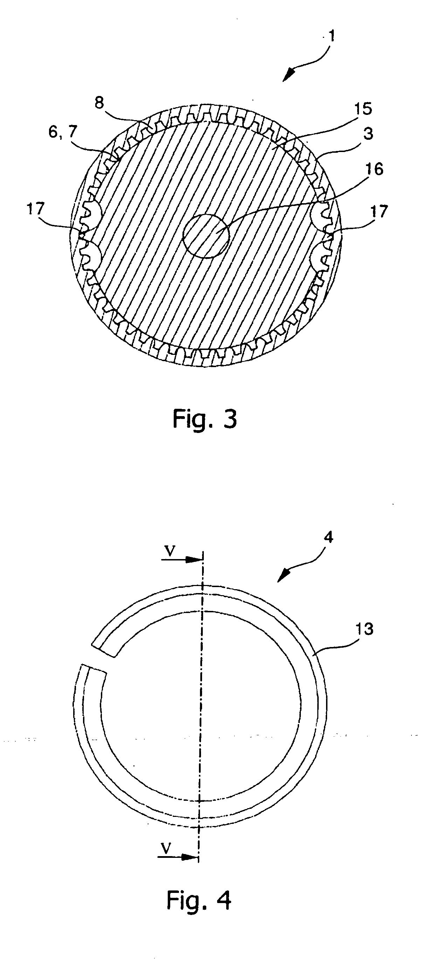

Figur 3 zeigt einen weiteren Schnitt der erfindungsgemäßen Elektromotor-Getriebe-Einheit 1 aus der Figur 1 auf axialer Position der Adapterplatte 15 neben Federring 4 sowie erster umlaufender Nut 9 bzw. zweiter umlaufender Nut 10. Die Innenwandung 7 des Hohlrads 3, die durch den Innendurchmesser der Innenverzahnung 8 gebildet wird, liegt zur Zentrierung des Getriebes in Bezug auf die Welle 16 des Elektromotors flächig an der zylindrischen Außenwandung 6 der Adapterplatte 15 an. Als Drehmomentstütze greifen zwei Zähne 17 der Adapterplatte 15 in die Innenverzahnung 8 des Hohlrads 3 ein.

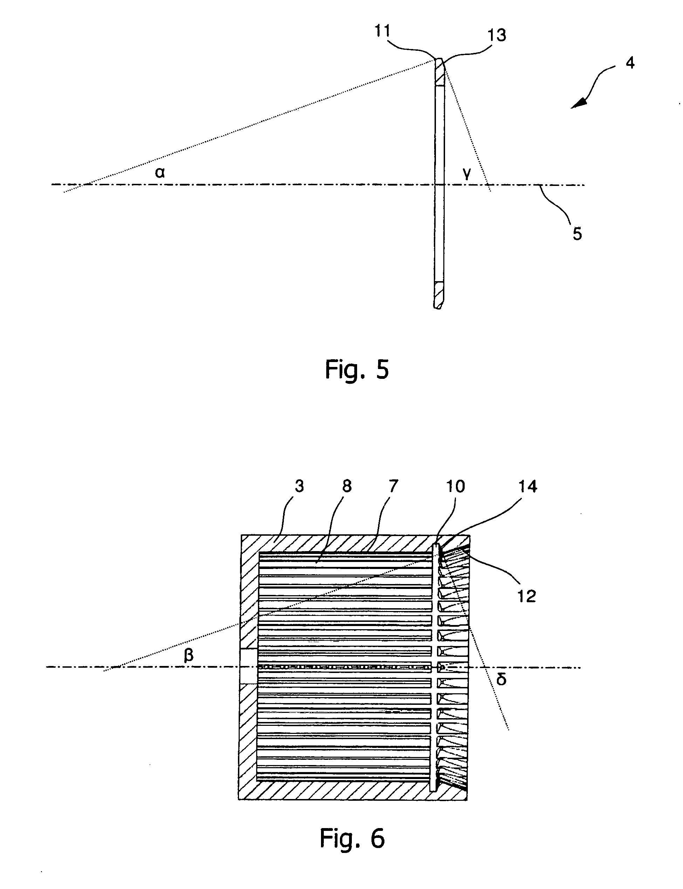

Die Figuren 4 und 5 zeigen den Federring der erfindungsgemäßen Elektromotor-Getriebe-Einheit 1 aus den Figuren 1 bis 3, wobei in Figur 4 eine Rückansicht und in Figur 5 eine geschnittene Seitenansicht des Federrings 4 gezeigt ist. Der Federring 4 weist an der Vorderkante und an der Rückkante seines Außenumfangs jeweils eine Fase auf. Die Fase an der Vorderkante ist als erste Fase 11, und die Fase an der Rückkante als dritte Fase 13 bezeichnet. Der Winkel α der ersten Fase 11 zur Achse 5 des Federrings 4 beträgt 20°, der Winkel γ der dritten Fase 13 zur Achse 5 des Federrings 4 beträgt 70°. Wie Figur 6 zeigt, finden sich diese Winkel auf dem Hohlrad 3 wieder.

Figur 6 zeigt eine geschnittene Draufsicht des Hohlrads 3 der erfindungsgemäßen Elektromotor-Getriebe-Einheit 1 aus den Figuren 1 bis 3. Die dem zu verbindenden Elektromotor zugewandte Vorderkante der Innenwandung 7 des Hohlrads 3 weist eine zweite Fase 12 auf, deren Winkel β zur Achse des Hohlrads 3 dem Winkel α des Federrings 4 entspricht. Die ebenfalls dem zu verbindenden Elektromotor zugewandte Vorderkante der zweiten umlaufenden Nut 10 in der Innenwandung 7 des Hohlrads 3 weist eine vierte Fase 14 auf, deren Winkel δ zur Achse des Hohlrads 3 dem Winkel γ der dritten Fase 13 des Federrings 4 entspricht.

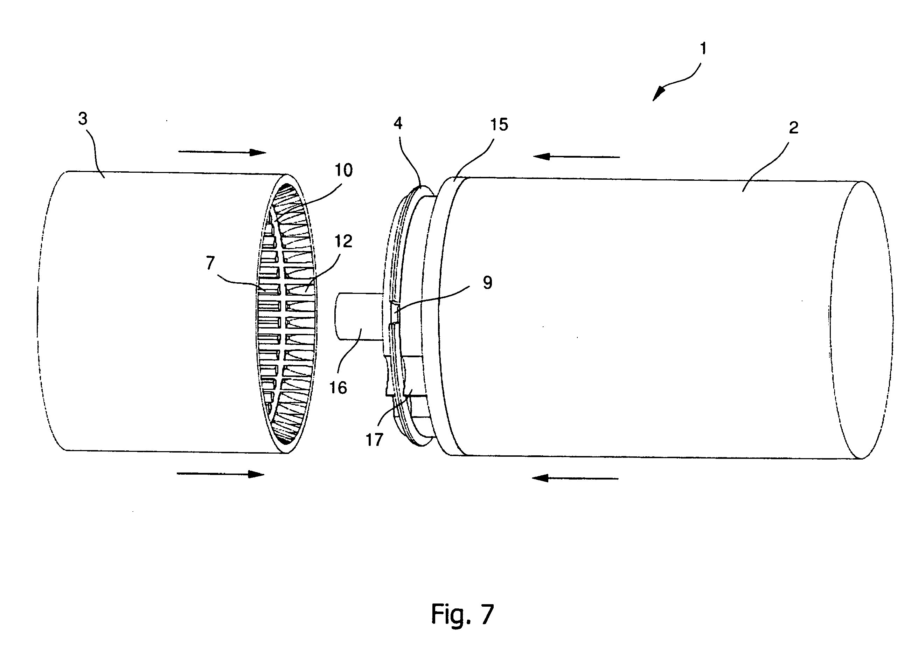

Die Figur 7 zeigt eine Explosionsdarstellung der erfindungsgemäßen Elektromotor-Getriebe-Einheit 1 aus den Figuren 1 bis 3 in einer schrägen Seitenansicht. Die Darstellung zeigt die zwei zu verbindenden Bauteile der erfindungsgemäßen Elektromotor-Getriebe-Einheit 1, nämlich das Hohlrad 3 und das Elektromotorgehäuse 2 mit der Adapterplatte 15, in Vorbereitung auf die Montage. Der Federring 4 ist bereits in die erste umlaufende Nut 9 der Adapterplatte 15 eingesetzt und ragt mit seinem radial äußeren Bereich aus der Nut 9 heraus. Beim Zusammenstecken von Getriebegehäuse 3 und Adapterplatte 15 kommen zuerst die erste Fase 11 des Federrings und die zweite Fase 12 des Getriebegehäuses 3 in Kontakt und gleiten während des weiteren Einsteckvorgangs aufeinander. Hierdurch wird der Durchmesser des Federrings 4 kontinuierlich derart verjüngt, dass der Federring 4 schlussendlich vollständig in die erste umlaufende Nut 9 der Adapterplatte 15 eintaucht. Am Ende des Einsteckvorgangs schnappt der Federring 4 mit seinem radial äußeren Bereich in die zweite umlaufende Nut 10 des Hohlrads 3 ein, wobei eine Entspannung des Federrings 4 auf den ursprünglichen Durchmesser stattfindet. Der umgekehrte Vorgang findet bei der Demontage der Elektromotor-Getriebe-Einheit 1 statt, wobei hierbei die notwendige Verjüngung des Federringdurchmessers durch ein aufeinander Abgleiten von dritter Fase 13 und vierter Fase 14 hervorgerufen wird. Die Kraft, die zur Montage bzw. Demontage der erfindungsgemäßen Elektromotor-Getriebe-Einheit 1 erforderlich ist, bestimmt sich zum einen aus dem Elastizitätsmodul des Federrings 4 und zum anderen durch den Fasenwinkel der jeweils in Eingriff befindlichen Fasen. Im Ausführungsbeispiel ist der Federring 4 aus Stahl gefertigt. Die Winkel α und β der ersten Fase 11 und der zweiten Fase 12 sind mit 20° deutlich flacher als die Winkel γ und ö der dritten Fase 13 und der vierten Fase 14, wodurch die zur Montage erforderliche Axialkraft deutlich geringer ist als die zur Demontage erforderliche Axialkraft. Hohlrad 3 und Adapterplatte 15 sind stabil ausgeführt, wodurch bei der Montage und Demontage keinerlei Verformung dieser Bauteile auftritt.

## Patentansprüche

1. Elektromotor (1) mit Anbaugehäuse, insbesondere Getriebegehäuse (3) oder Encodergehäuse, mit einem Elektromotorgehäuse (2), das formschlüssig mit dem Anbaugehäuse verbindbar ist,
**dadurch gekennzeichnet, dass**
für den axialen Formschluss ein einfach geschlitzter radialelastischer Federring (4) vorgesehen ist, dessen radial innerer Bereich in einer ersten umlaufenden Nut (9) einer Außenwandung (6) eines der beiden verbundenen Bauteile (2, 3) und dessen radial äußerer Bereich in einer zweiten umlaufenden Nut (10) einer Innenwandung (7) des zweiten verbundenen Bauteils (2; 3) ruht, wobei ausreichend radiales Spiel zwischen dem Innendurchmesser des Federrings (4) und dem Innendurchmesser der ersten Nut (9) und/oder zwischen dem Außendurchmesser des Federrings (4) und dem Außendurchmesser der zweiten Nut (10) für eine elastische Aufweitung oder Verjüngung des Federrings (4) zur Montage und Demontage vorhanden ist, wobei Elektromotorgehäuse (2) und Anbaugehäuse zumindest im Verbindungsbereich zylindrisch und zueinander konzentrisch ausgeführt sind, wobei der Federring (4) vor dem Herstellen der Verbindung an einem ersten zu verbindenden Bauteil (2; 3) in der Nut (9; 10) dieses Bauteils vormontiert ist, wobei zwischen dem Innendurchmesser des Federrings (4) und dem Innendurchmesser der Nut (9; 10) bzw. zwischen dem Außendurchmesser des Federrings (4) und dem Außendurchmesser der Nut (9; 10) radiales Spiel besteht, und wobei eine dem zweiten zu verbindenden Bauteil (2; 3) zugewandte erste Kante des Außenumfangs bzw. Innenumfangs des radial aus der Nut ragenden Bereichs des Federrings (4) eine erste Fase (11), und eine äußere zweite Kante der Innenwandung (7) bzw. Außenwandung (6) des zweiten zu verbindenden Bauteils (2; 3) eine zweite Fase (12) aufweisen, wobei die elastische Verjüngung oder Aufweitung des Federrings (4) zur Montage der beiden zu verbindenden Bauteile (2, 3) durch ein Zusammenwirken von erster Fase (11) und zweiter Fase (12) beim Zusammenstecken der beiden Bauteile (2, 3) bedingt ist, wobei eine der ersten Kante gegenüber liegende dritte Kante auf dem selben Umfang des Federrings (4), auf dem sich die erste Kante befindet, eine dritte Fase aufweist (13), und wobei eine vierte Kante, die von einer auf der Innenwandung (7) bzw. Außenwandung (6) des zweiten zu verbindenden Bauteils (2; 3) liegenden und dem ersten Bauteil (2; 3) zugewandten Kante der Nut (9; 10) des zweiten zu verbindenden Bauteils (2; 3) gebildet wird, eine vierte Fase (14) aufweist, wobei die elastische Aufweitung oder Verjüngung des Federrings (4) zur Demontage der beiden Bauteile (2, 3) durch ein Zusammenwirken von dritter Fase (13) und vierter Fase (14) beim Auseinanderziehen der beiden Bauteile (2, 3) bedingt ist.

2. Elektromotor (1) mit Anbaugehäuse nach Anspruch 1, **dadurch gekennzeichnet, dass** die zylindrische Außenwandung (6) zur Zentrierung flächig an der zylindrischen Innenwandung (7) anliegt.

3. Elektromotor (1) mit Anbaugehäuse nach einem der Ansprüche 1 bis 2, **dadurch gekennzeichnet, dass** Außenwandung (6) und Innenwandung (7) zur Drehmomentableitung axial zusammensteckbare, ineinander eingreifende Formschlusselemente aufweisen.

4. Elektromotor (1) mit Anbaugehäuse nach Anspruch 3, **dadurch gekennzeichnet, dass** die Formschlusselemente der Innenwandung (7) durch eine Innenverzahnung (8), und die Formschlusselemente der Außenwandung (6) durch mindestens zwei in die Innenverzahnung (8) eingreifende Zähne (17) gebildet sind.

5. Elektromotor (1) mit Anbaugehäuse nach Anspruch 4, **dadurch gekennzeichnet, dass** das Anbaugehäuse ein Hohlrad eines Planetengetriebes ist, wobei die Innenverzahnung (8) durch die Verzahnung des Hohlrades gebildet ist.

6. Elektromotor (1) mit Anbaugehäuse nach einem der Ansprüche 1 bis 5, **dadurch gekennzeichnet, dass** der Winkel der ersten Fase (11) gemessen zur Achse (5) des Federrings (4) dem Winkel der zweiten Fase (12) gemessen zur Achse der zylindrischen Innenwandung (7) oder Außenwandung (6) des zweiten zu verbindenden Bauteils entspricht.

7. Elektromotor (1) mit Anbaugehäuse nach Anspruch 6, **dadurch gekennzeichnet, dass** der Winkel der ersten Fase (11) und der zweiten Fase (12) im Bereich zwischen 5° und 30° liegt und vorzugsweise 20° beträgt.

8. Elektromotor (1) mit Anbaugehäuse nach einem der Ansprüche 1 bis 7, **dadurch gekennzeichnet, dass** der Winkel der dritten Fase (13) gemessen zur Achse (5) des Federrings (4) dem Winkel der vierten Fase (14) gemessen zur Achse der zylindrischen Innenwandung (7) oder Außenwandung (6) des zweiten zu verbindenden Bauteils entspricht.

9. Elektromotor (1) mit Anbaugehäuse nach Anspruch 8, **dadurch gekennzeichnet, dass** der Winkel der dritten Fase (13) und der vierten Fase (14) größer ist als der Winkel der ersten Fase (11) und der zweiten Fase (12).

10. Elektromotor (1) mit Anbaugehäuse nach Anspruch 9, **dadurch gekennzeichnet, dass** der Winkel der dritten Fase (13) und der vierten Fase (14) im Bereich zwischen 60° und 80° liegt und vorzugsweise 70° beträgt.

11. Elektromotor (1) mit Anbaugehäuse nach einem der Ansprüche 1 bis 10, **dadurch gekennzeichnet, dass** die axiale Erstreckung der ersten Nut (9) und der zweiten Nut (10) begrenzt ist und jeweils der axialen Erstreckung des Federrings (4) entspricht.

12. Elektromotor (1) mit Anbaugehäuse nach einem der vorstehenden Ansprüche 1 bis 11, **dadurch gekennzeichnet, dass** der Federring (4) aus Metall, vorzugsweise Stahl, oder aus Kunststoff oder einem Verbundwerkstoff, wie Kunststoff mit Füllstoffen, Carbon oder Kombinationen dieser Werkstoffe insbesondere auch mit Stahl, hergestellt ist.

## Claims

1. Electric motor (1) with an attachable housing, in particular a gear housing (3) or encoder housing, with an electric motor housing (2) which can be positively connected to the attachable housing, **characterised in that**
a single-slotted radially elastic spring ring (4) is provided as a means of establishing the positive axial connection, the radially inner region of which sits in a first circumferentially extending groove (9) of an external wall (6) of one of the two connected components (2, 3) and the radially outer region of which sits in a second circumferentially extending groove (10) of an internal wall (7) of the second connected component (2; 3), and sufficient radial clearance is provided between the internal diameter of the spring ring (4) and the internal diameter of the first groove (9) and/or between the external diameter of the spring ring (4) and the external diameter of the second groove (10) to permit an elastic expansion or contraction of the spring ring (4) for assembly and dismantling purposes, and the electric motor housing (2) and attachable housing are cylindrical and disposed concentrically with one another at least in the connecting region, and prior to establishing the connection to a first component (2; 3) to be connected, the spring ring (4) is pre-fitted in the groove (9; 10) of this component, and a radial clearance exists between the internal diameter of the spring ring (4) and the internal diameter of the groove (9; 10) respectively between the external diameter of the spring ring (4) and the external diameter of the groove (9; 10), and a first edge of the external circumference respectively internal circumference of the region of the spring ring (4) projecting radially out of the groove and facing the second component (2; 3) to be
connected has a first chamfer (11), and an outer second edge of the internal wall (7) respectively external wall (6) of the second component (2; 3) to be connected has a second chamfer (12), and the elastic contraction or expansion of the spring ring (4) for assembling the two components (2, 3) to be connected is induced by a co-operation of the first chamfer (11) and second chamfer (12) as the two components (2, 3) are fitted to one another, and a third edge lying opposite the first edge on the same circumference of the spring ring (4) on which the first edge is disposed has a third chamfer (13), and a fourth edge formed by an edge of the groove (9; 10) of the second component (2; 3) to be connected lying on the internal wall (7) respectively external wall (6) of the second component (2; 3) to be connected and facing the first component (2; 3) has a fourth chamfer (14), and the elastic expansion or contraction of the spring ring (4) for dismantling the two components (2, 3) is induced by a co-operation of the third chamfer (13) and fourth chamfer (14) as the two components (2, 3) are pulled apart from one another.

2. Electric motor (1) with attachable housing as claimed in claim 1, **characterised in that** the cylindrical external wall (6) lies flat against the cylindrical internal wall (7) for centring purposes.

3. Electric motor (1) with attachable housing as claimed in one of claims 1 to 2, **characterised in that** the external wall (6) and internal wall (7) have mutually engaging positively connecting elements which can be axially fitted to one another in order to transmit torque.

4. Electric motor (1) with attachable housing as claimed in claim 3, **characterised in that** the positively connecting elements of the internal wall (7) are provided in the form of an internal toothing (8) and the positively connecting elements of the external wall (6) are provided in the form of at least two teeth (17) locating in the internal toothing (8).

5. Electric motor (1) with attachable housing as claimed in claim 4, **characterised in that** the attachable housing is an annulus of a planetary gear, and the internal toothing (8) is formed by the toothing of the annulus.

6. Electric motor (1) with attachable housing as claimed in one of claims 1 to 5, **characterised in that** the angle of the first chamfer (11) measured to the axis (5) of the spring ring (4) corresponds to the angle of the second chamfer (12) measured to the axis of the cylindrical internal wall (7) or external wall (6) of the second component to be connected.

7. Electric motor (1) with attachable housing as claimed in claim 6, **characterised in that** the angle of the first chamfer (11) and the second chamfer (12) is in the range of between 5° and 30° and is preferably 20°.

8. Electric motor (1) with attachable housing as claimed in one of claims 1 to 7, **characterised in that** the angle of the third chamfer (13) measured to the axis (5) of the spring ring (4) corresponds to the angle of the fourth chamfer (14) measured to the axis of the cylindrical internal wall (7) or external wall (6) of the second component to be connected.

9. Electric motor (1) with attachable housing as claimed in claim 8, **characterised in that** the angle of the third chamfer (13) and the fourth chamfer (14) is greater than the angle of the first chamfer (11)
and the second chamfer (12).

10. Electric motor (1) with attachable housing as claimed in claim 9, **characterised in that** the angle of the third chamfer (13) and the fourth chamfer (14) is in the range of between 60° and 80° and is preferably 70°.

11. Electric motor (1) with attachable housing as claimed in one of claims 1 to 10, **characterised in that** the axial extension of the first groove (9) and the second groove (10) is limited and respectively corresponds to the axial extension of the spring ring (4).

12. Electric motor (1) with attachable housing as claimed in one of preceding claims 1 to 11, **characterised in that** the spring ring (4) is made from metal, preferably steel, or from plastic or a composite material, such as plastic with fillers, carbon or combinations of these materials, including also steel in particular.

## Revendications

1. Moteur électrique (1) à carter annexe rapporté, notamment un carter de transmission (3) ou un carter d'encodeur, comprenant un carter de moteur électrique (2), qui peut être relié par complémentarité de formes au carter annexe rapporté,
**caractérisé en ce que**
pour la liaison axiale par complémentarité de formes, il est prévu un anneau de ressort (4) radialement élastique, simplement fendu, dont la zone radialement intérieure est logée dans une première rainure périphérique (9) d'une paroi extérieure (6) de l'une des deux pièces (2, 3) reliées, et dont la zone radialement extérieure est logée dans une deuxième rainure périphérique (10) d'une paroi intérieure (7) de la deuxième pièce reliée (2; 3),
**en ce qu'**il existe un jeu radial suffisant entre le diamètre intérieur de l'anneau de ressort (4) et le diamètre intérieur de la première rainure (9) et/ou entre le diamètre extérieur de l'anneau de ressort (4) et le diamètre extérieur de la deuxième rainure (10), pour un évasement ou un rétrécissement élastique de l'anneau de ressort (4) en vue du montage et du démontage,
**en ce que** le carter de moteur électrique (2) et le carter annexe rapporté sont réalisés cylindriques et mutuellement concentriques au moins dans la zone de liaison,
**en ce que** l'anneau de ressort (4) est, avant l'établissement de la liaison, pré-monté sur une
première pièce (2; 3) à relier, dans la rainure (9, 10) de cette pièce,
**en ce qu'**il existe un jeu radial entre le diamètre intérieur de l'anneau de ressort (4) et le diamètre intérieur de la rainure (9; 10), respectivement entre le diamètre extérieur de l'anneau de ressort (4) et le diamètre extérieur de la rainure (9; 10), et
**en ce qu'**une première arête de la périphérie extérieure, respectivement de la périphérie intérieure, de la zone de l'anneau de ressort (4), qui fait saillie de la rainure, arête qui est dirigée vers la deuxième pièce à relier (2; 3), présente un premier chanfrein (11), et une deuxième arête extérieure de la paroi intérieure (7), respectivement de la paroi extérieure (6), de la deuxième pièce à relier (2; 3), présente un deuxième chanfrein (12),
**en ce que** le rétrécissement ou l'évasement élastique de l'anneau de ressort (4) pour le montage des deux pièces (2, 3) à relier, est obtenu par l'interaction du premier chanfrein (11) et du deuxième chanfrein (12) lors de l'emmanchement réciproque des deux pièces (2, 3),
**en ce qu'**une troisième arête, opposée à la première arête, sur la même périphérie de l'anneau de ressort (4) sur laquelle se trouve la première arête, présente un troisième chanfrein (13), et
**en ce qu'**une quatrième arête, qui est formée par une arête de la rainure (9; 10) de la deuxième pièce à relier (2; 3), située sur la paroi intérieure (7), respectivement sur la paroi extérieure (6), de la deuxième pièce à relier (2; 3), et dirigée vers la première pièce (2; 3), présente un quatrième chanfrein (14),
**en ce que** l'évasement ou le rétrécissement élastique de l'anneau de ressort (4) pour le démontage des deux pièces (2, 3) est obtenu par une interaction du
troisième chanfrein (13) et du quatrième chanfrein (14) lors de l'extraction réciproque des deux pièces (2, 3).

2. Moteur électrique (1) à carter annexe rapporté selon la revendication 1, **caractérisé en ce que** la paroi extérieure cylindrique (6) s'appuie selon un contact de surface, contre la paroi intérieure cylindrique (7).

3. Moteur électrique (1) à carter annexe rapporté selon l'une des revendications 1 à 2, **caractérisé en ce que** la paroi extérieure (6) et la paroi intérieure (7) présentent, pour la reprise de couple, des éléments de liaison par complémentarité de formes pouvant être emmanchés axialement les uns dans les autres et engrenant mutuellement.

4. Moteur électrique (1) à carter annexe rapporté selon la revendication 3, **caractérisé en ce que** les éléments de liaison par complémentarité de formes de la paroi intérieure (7) sont formés par une denture intérieure (8), et les éléments de liaison par complémentarité de formes de la paroi extérieure (6) par au moins deux dents (17) venant en prise dans la denture intérieure (8).

5. Moteur électrique (1) à carter annexe rapporté selon la revendication 4, **caractérisé en ce que** le carter annexe rapporté est une couronne d'un train planétaire, la denture intérieure (8) étant formée par la denture de la couronne.

6. Moteur électrique (1) à carter annexe rapporté selon l'une des revendications 1 à 5, **caractérisé en ce que** l'angle du premier chanfrein (11), mesuré par rapport à l'axe (5) de l'anneau de ressort (4), correspond à l'angle du deuxième chanfrein (12), mesuré
par rapport à l'axe de la paroi intérieure (7) ou de la paroi extérieure (6) cylindriques de la deuxième pièce à relier.

7. Moteur électrique (1) à carter annexe rapporté selon la revendication 6, **caractérisé en ce que** l'angle du premier chanfrein (11) et du deuxième chanfrein (12) se situe dans une plage entre 5° et 30°, et vaut de préférence 20°.

8. Moteur électrique (1) à carter annexe rapporté selon l'une des revendications 1 à 7, **caractérisé en ce que** l'angle du troisième chanfrein (13), mesuré par rapport à l'axe (5) de l'anneau de ressort (4), correspond à l'angle du quatrième chanfrein (14), mesuré par rapport à l'axe de la paroi intérieure (7) ou de la paroi extérieure (6) cylindriques de la deuxième pièce à relier.

9. Moteur électrique (1) à carter annexe rapporté selon la revendication 8, **caractérisé en ce que** l'angle du troisième chanfrein (13) et du quatrième chanfrein (14) est supérieur à l'angle du premier chanfrein (11) et du deuxième chanfrein (12).

10. Moteur électrique (1) à carter annexe rapporté selon la revendication 9, **caractérisé en ce que** l'angle du troisième chanfrein (13) et du quatrième chanfrein (14) se situe dans une plage entre 60° et 80°, et vaut de préférence 70°.

11. Moteur électrique (1) à carter annexe rapporté selon l'une des revendications 1 à 10, **caractérisé en ce que** l'étendue axiale de la première rainure (9) et de la deuxième rainure (10) est limitée et correspond pour chacune à l'étendue axiale de l'anneau de ressort (4).

12. Moteur électrique (1) à carter annexe rapporté selon l'une des revendications précédentes 1 à 11, **caractérisé en ce que** l'anneau de ressort (4) est fabriqué en métal, de préférence de l'acier, ou en matière plastique ou en une matière plastique composite, comme une matière plastique avec des substances de charge, du carbone ou des combinaisons de ces matériaux, notamment également avec de l'acier.
